# EUROPEAN PATENT APPLICATION

(11) **EP 4 503 457 A1**
(43) Date of publication of application: **05.02.2025**
(21) Application number: 22934294.4
(22) Date of filing: 31.03.2022
(51) Int. Cl.: H04B 7/00, H04W 56/00

(54) **EFFECTIVE TIME DETERMINATION METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/084696
(87) International publication number: WO 2023/184457

(57) **Abstract**

Disclosed in embodiments of the present application are an effective time determination method and apparatus. The method comprises: receiving system information by means of at least one system information window within a predefined time domain range (201); and determining an effective time of first information according to signaling carried in the system information (202). In this way, a terminal device can also merge and receive the system information in different system information windows while determining the effective time of the first information, such that the information transmission efficiency and the information receiving accuracy are effectively improved, the transmission robustness of a communication system is improved, and when the system information is updated, it can also be ensured that a network device and the terminal device achieve consistent understanding of the effective time of the updated system information.

## Description

### FIELD

The present invention relates to the field of communication technology, and more particularly to a method and apparatus for determining an effective time.

### BACKGROUND

With the continuous development of the wireless communication technology, satellite communication is considered as an important aspect of the future development of the wireless communication technology. In the scenario of the satellite communication, due to a long signal transmission distance between a sending end and a receiving end, data transmission has a large delay. For transmissions with an uplink-downlink relationship, the terminal device can compensate for the transmission delay according to ephemeris information and common timing advance (common TA) related information. The ephemeris information and the common TA information are notified to the terminal device via system information.

In the related art, the terminal device will consider the ephemeris information and the common TA information obtained previously as available within a validation duration. The effective time of these information may be associated with a system information (SI) window, that is, the effective time is related to a time-domain position of the system information window, which however may result in some terminal devices being unable to collectively receive system information from different SI windows, affecting the reliability of the reception performance of a system.

### SUMMARY

In a first aspect, embodiments of the present invention provide a method for determining an effective time, which is performed by a terminal device, and includes: receiving system information in at least one system information window within a time-domain range predefined; and determining the effective time of first information according to a signaling carried in the system information.

Optionally, the at least one system information window within the time-domain range is used to collectively receive the system information; at least one system information window not within the time-domain range is used to receive the system information separately.

Optionally, the method further includes: determining the time-domain range according to configuration information of the time-domain range.

Optionally, the configuration information of the time-domain range includes at least one of: a starting position of the time-domain range; a length of the time-domain range; or an ending position of the time-domain range.

Optionally, the method further includes: determining the configuration information of the time-domain range defined by a protocol; or determining the configuration information of the time-domain range according to a second signaling sent by a network device.

Optionally, the method further includes: receiving a primary synchronization signal (PSS) and/or a secondary synchronization signal (SSS) sent by a network device; and determining the configuration information of the time-domain range according to the PSS and/or the SSS.

Optionally, determining the configuration information of the time-domain range according to the PSS and/or the SSS includes: determining the configuration information of the time-domain range according to sequence information of the PSS and/or the SSS; or determining the configuration information of the time-domain range according to transmission position information of the PSS and/or the SSS.

In a second aspect, embodiments of the present invention provide a method for determining an effective time, which is performed by a network device, and includes: sending system information to a terminal device in at least one system information window within a time-domain range predefined. The system information carries a signaling for determining the effective time of first information.

Optionally, the method further includes: sending the system information to the terminal device in at least one system information window not within the time-domain range. The at least one system information window within the time-domain range is used to collectively receive the system information; the at least one system information window not within the time-domain range is used to receive the system information separately.

Optionally, the method further includes: sending configuration information of the time-domain range to the terminal device. The configuration information of the time-domain range is used to determine the time-domain range.

Optionally, the configuration information of the time-domain range includes at least one of: a starting position of the time-domain range; a length of the time-domain range; or an ending position of the time-domain range.

Optionally, sending the configuration information of the time-domain range to the terminal device includes: sending a second signaling to the terminal device. The second signaling is used to determine the configuration information of the time-domain range.

Optionally, sending the configuration information of the time-domain range to the terminal device includes: sending a primary synchronization signal (PSS) and/or a secondary synchronization signal (SSS) to the terminal device. Sequence information of the PSS and/or the SSS is used to determine the configuration information of the time-domain range; or transmission position information of the PSS and/or the SSS is used to determine the configuration information of the time-domain range.

In a third aspect, embodiments of the present invention provide an apparatus for determining an effective time, which is applicable to a terminal device, and includes: a transceiving unit and a processing unit. The transceiving unit is configured to receive system information in at least one system information window within a time-domain range predefined; and the processing unit is configured to determine the effective time of first information according to a signaling carried in the system information.

Optionally, the at least one system information window within the time-domain range is used to collectively receive the system information; at least one system information window not within the time-domain range is used to receive the system information separately.

Optionally, the processing unit is further configured to: determine the time-domain range according to configuration information of the time-domain range.

Optionally, the configuration information of the time-domain range includes at least one of: a starting position of the time-domain range; a length of the time-domain range; or an ending position of the time-domain range.

Optionally, the processing unit is specifically configured to: determine the configuration information of the time-domain range defined by a protocol; or determine the configuration information of the time-domain range according to a second signaling sent by a network device.

Optionally, the processing unit is specifically configured to: receive a primary synchronization signal (PSS) and/or a secondary synchronization signal (SSS) sent by a network device; and determine the configuration information of the time-domain range according to the PSS and/or the SSS.

Optionally, the processing unit is specifically configured to: determine the configuration information of the time-domain range according to sequence information of the PSS and/or the SSS; or determine the configuration information of the time-domain range according to transmission position information of the PSS and/or the SSS.

In a fourth aspect, embodiments of the present invention provide an apparatus for determining an effective time, which is applicable to a network device, and includes a transceiving unit. The transceiving unit is configured to send system information to a terminal device in at least one system information window within a time-domain range predefined. The system information carries a signaling for determining the effective time of first information.

Optionally, the transceiving unit is further configured to send the system information to the terminal device in at least one system information window not within the time-domain range. The at least one system information window within the time-domain range is used to collectively receive the system information; the at least one system information window not within the time-domain range is used to receive the system information separately.

Optionally, the transceiving unit is further configured to send configuration information of the time-domain range to the terminal device. The configuration information of the time-domain range is used to determine the time-domain range.

Optionally, the configuration information of the time-domain range includes at least one of: a starting position of the time-domain range; a length of the time-domain range; or an ending position of the time-domain range.

Optionally, the transceiving unit is specifically configured to: send a second signaling to the terminal device. The second signaling is used to determine the configuration information of the time-domain range.

Optionally, the transceiving unit is specifically configured to: send a primary synchronization signal (PSS) and/or a secondary synchronization signal (SSS) to the terminal device. Sequence information of the PSS and/or the SSS is used to determine the configuration information of the time-domain range; or transmission position information of the PSS and/or the SSS is used to determine the configuration information of the time-domain range.

In a fifth aspect, embodiments of the present invention provide a communication apparatus, which includes: a processor; and a memory having stored therein computer programs. The processor is configured to execute the computer programs stored in the memory to cause the apparatus to perform the method for determining an effective time as described in embodiments of the first aspect.

In a sixth aspect, embodiments of the present invention provide a communication apparatus, which includes: a processor; and a memory having stored therein computer programs. The processor is configured to execute the computer programs stored in the memory to cause the apparatus to perform the method for determining an effective time as described in embodiments of the second aspect.

In a seventh aspect, embodiments of the present invention provide a communication apparatus, which includes a processor and an interface circuit. The interface circuit is configured to receive code instructions and transmit the code instructions to the processor. The processor is configured to run the code instructions to cause the apparatus to perform the method for determining an effective time as described in embodiments of the first aspect.

In an eighth aspect, embodiments of the present invention provide a communication apparatus, which includes a processor and an interface circuit. The interface circuit is configured to receive code instructions and transmit the code instructions to the processor. The processor is configured to run the code instructions to cause the apparatus to perform the method for determining an effective time as described in embodiments of the second aspect.

In a ninth aspect, embodiments of the present invention provide a computer-readable storage medium, having stored therein instructions that, when executed, cause the method for determining an effective time as described in embodiments of the first aspect to be performed.

In a tenth aspect, embodiments of the present invention provide a computer-readable storage medium, having stored therein instructions that, when executed, cause the method for determining an effective time as described in embodiments of the second aspect to be performed.

In an eleventh aspect, embodiments of the present invention provide a computer program that, when run on a computer, causes the computer to perform the method for determining an effective time as described in embodiments of the first aspect.

In a twelfth aspect, embodiments of the present invention provide a computer program that, when run on a computer, causes the computer to perform the method for determining an effective time as described in embodiments of the second aspect.

With the method and apparatus for determining an effective time according to embodiments of the present invention, first system information is determined according to the system information received in at least one system information window within the time-domain range predefined, and the effective time of the first information is determined according to the signaling carried in the first system information, so that the terminal device can determine the effective time of the first information, and at the same time can collectively receive the system information in different system information windows, which effectively improves the information transmission efficiency and the information reception accuracy, and improves the transmission robustness of communication system. Moreover, when the system information is updated, the network device and the terminal device can be ensured to have a consistent understanding on the effective time of the updated system information.

Additional aspects and advantages of present invention will be given in part in the following descriptions, become apparent in part from the following descriptions, or be learned from the practice of the embodiments of the present invention.

### BRIEF DESCRIPTION OF THE DRAWINGS

In order to clearly illustrate the technical solutions in embodiments of the present invention or in the related art, drawings to be used for the description of embodiments of the present invention or the related art are described below.
FIG. 1a is a schematic architectural diagram of a communication system according to embodiments of the present invention;
FIG. 1b is a schematic diagram showing a transmission manner with uplink-downlink frame timing alignment at a network device side;
FIG. 1c is a schematic diagram showing a transmission manner with uplink-downlink frame timing shift at a network device side;
FIG. 2 is a schematic flowchart of a method for determining an effective time according to embodiments of the present invention;
FIG. 3 is a schematic flowchart of a method for determining an effective time according to embodiments of the present invention;
FIG. 4 is a schematic flowchart of a method for determining an effective time according to embodiments of the present invention;
FIG. 5 is a schematic flowchart of a method for determining an effective time according to embodiments of the present invention;
FIG. 6 is a schematic block diagram of an apparatus for determining an effective time according to embodiments of the present invention;
FIG. 7 is a schematic block diagram of an apparatus for determining an effective time according to embodiments of the present invention;
FIG. 8 is a schematic block diagram of another apparatus for determining an effective time according to embodiments of the present invention; and
FIG. 9 is a schematic block diagram of a chip according to embodiments of the present invention.

### DETAILED DESCRIPTION

Reference will now be made in detail to illustrative embodiments of the present invention, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with embodiments of the present invention. Instead, they are merely examples of apparatuses and methods consistent with some aspects of embodiments of the present invention as recited in the appended claims.

Terms used in embodiments of the present invention are only for the purpose of describing specific embodiments, but should not be construed to limit embodiments of the present invention. As used in embodiments of the present invention and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. Depending on the context, the term "if' as used herein may be construed to mean "when" or "upon" or "in response to determining".

Embodiments of the present invention will be described in detail below, examples of which are shown in the accompanying drawings, in which the same or similar numbers in different drawings represent the same or similar elements. The embodiments described below with reference to the accompanying drawings are illustrative, which are intended to explain the present invention, and shall not be construed to limit the present invention.

For better understanding of the method for determining an effective time according to embodiments of the present invention, a communication system to which embodiments of the present invention are applicable is described first below.

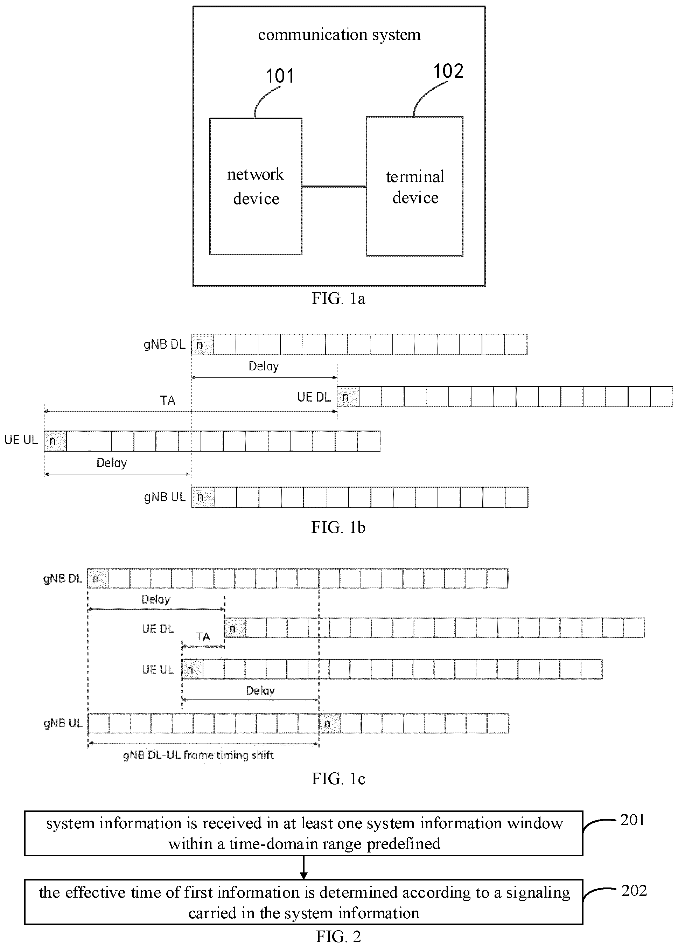

Referring to FIG. 1a, FIG. 1a is a schematic architectural diagram of a communication system according to embodiments of the present invention. The communication system may include, but not limited to, a first network device, a second network device, and a terminal device. The number and forms of the devices shown in FIG. 1a are only used as an example, and do not constitute a limitation on embodiments of the present invention. In actual applications, two or more network devices and two or more terminal devices may be included. As an example for illustration, the communication system 10 shown in FIG. 1a includes one network device 101 and one terminal device 102.

It should be noted that the technical solutions as set forth in embodiments of the present invention may be applied to various communication systems, for example, a long term evolution (LTE) system, a 5th generation (5G) mobile communication system, a 5G new radio (NR) system, or other new mobile communication systems in the future.

The network device 101 in embodiments of the present invention is an entity at a network side for sending or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present invention do not limit the specific technique and specific device form adopted by the network device. The network device according to embodiments of the present invention may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal device 102 in embodiments of the present invention is an entity at a user side for receiving or sending signals, such as a mobile phone. The terminal device may also be called a terminal, a user equipment (UE), a mobile station (MS), a mobile terminal (MT), and so on. The terminal device may be a device with a communication function, such as a car, a smart car, a mobile phone, a wearable device, a tablet Pad, a computer with a wireless transceiving function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. Embodiments of the present invention do not limit the specific technique and the specific device form adopted by the terminal device.

With the continuous development of the wireless communication technology, satellite communication is considered as an important aspect of the future development of the wireless communication technology. In the scenario of the satellite communication, due to a long signal transmission distance between a sending end and a receiving end, data transmission has a large delay. For transmissions with an uplink-downlink relationship, it has been determined in the current discussion of standardization to introduce a parameter of offset (Koffset) to compensate for the transmission delay. As shown in FIG. 1b and FIG. 1c, FIG. 1b is a schematic diagram showing a transmission manner with uplink-downlink frame timing alignment at a network device side; and FIG. 1c is a schematic diagram showing a transmission manner with uplink-downlink frame timing shift at a network device side.

The terminal device can compensate for the transmission delay according to ephemeris information and common timing advance (common TA) related information. The ephemeris information and the common TA information are notified to the terminal device via system information.

In the related art, the terminal device will consider the ephemeris information and the common TA information obtained previously as available within a validation duration. The terminal device needs to read the system information to acquire the ephemeris information and the common TA information. The effective time of these information may be associated with a system information (SI) window.

However, for some terminal devices, such as Internet of Things (IoT) terminal devices, it may be necessary to collectively receive the system information from different SI windows to ensure correct reception of the system information. If the effective time of these information is associated with the SI windows, the system information transmitted in different SI windows is different, and the terminal device cannot collectively receive the system information from different SI windows, affecting the reliability of the reception performance of the system.

It can be understood that the communication system described in embodiments of the present invention is intended to illustrate the technical solutions as set forth in embodiments of the present invention more clearly, and does not constitute a limitation on the technical solutions as set forth in embodiments of the present invention. Those of ordinary skill in the art will know that with the evolution of the system architecture and the emergence of new service scenarios, the technical solutions as set forth in embodiments of the present invention are also applicable to similar technical problems.

The method and apparatus for determining an effective time provided by the present invention will be described in detail below with reference to the accompanying drawings.

Referring to FIG. 2, FIG. 2 is a schematic flowchart of a method for determining an effective time according to embodiments of the present invention. It should be noted that the method for determining an effective time as described in embodiments of the present invention is performed by a terminal device. As shown in FIG. 2, the method may include the following steps.

In step 201, system information is received in at least one system information window within a time-domain range predefined.

In embodiments of the present invention, within the time-domain range predefined, the terminal device is able to collectively receive the system information transmitted in at least one system information window within the time-domain range. The system information carries a signaling for determining an effective time of first information.

It should be noted that "collectively receive" means that if the terminal device does not complete the detection of the system information in a first SI window within the time-domain range and does not obtain the system information, the terminal device can continue the detection in at least one subsequent second SI window within the time-domain range, and collectively decode information received in the first SI window and information received in the at least one second SI window to obtain the system information.

It can be understood that the system information transmitted in at least one system information (SI) window within the time-domain range is the same, so the terminal device can collectively receive the system information transmitted in the at least one system information window.

In embodiments of the present invention, at least one SI window not within the time-domain range is used to receive the system information separately. That is, the terminal device receives the system information separately in the SI window not within the time-domain range.

In some examples, the terminal device is able to acquire configuration information of the time-domain range to determine the time-domain range. The configuration information of the time-domain range may include at least one of: a starting position of the time-domain range, a length of the time-domain range, or an ending position of the time-domain range. The terminal device is able to determine the time-domain range according to the configuration information of the time-domain range.

Optionally, the configuration information of the time-domain range may be defined by a protocol, or may be sent by a network device to the terminal device.

In some examples, the first information may include ephemeris information and common timing advance (common TA) information.

In step 202, the effective time of first information is determined according to a signaling carried in the system information.

In embodiments of the present invention, the terminal device is able to receive the system information in at least one system information window within the time-domain range, and determine the effective time of the first information according to the signaling carried in the system information. The signaling carried in the system is used to determine the effective time of the first information. The network device explicitly notifies the terminal device of the effective time of the first information via the signaling.

In embodiments of the present invention, in some examples, for an SI window not within the time-domain range, the terminal device receives the system information separately in the SI window not within the time-domain range.

It should be noted that in embodiments of the present invention, the system information transmitted in the SI window may be a system information block (SIB) or the like. The system information transmitted in the SI window within the time-domain range explicitly carries the signaling for determining the effective time of the first information, while the system information transmitted in the SI window not within the time-domain range does not explicitly carry the signaling.

In summary, the system information is received in at least one system information window within the time-domain range predefined, and the effective time of the first information is determined according to the signaling carried in the system information, so that the terminal device can determine the effective time of the first information, and at the same time can collectively receive the system information in different system information windows, which effectively improves the information transmission efficiency and the information reception accuracy, and improves the transmission robustness of communication system. Moreover, when the system information is updated, the network device and the terminal device can be ensured to have a consistent understanding on the effective time of the updated system information.

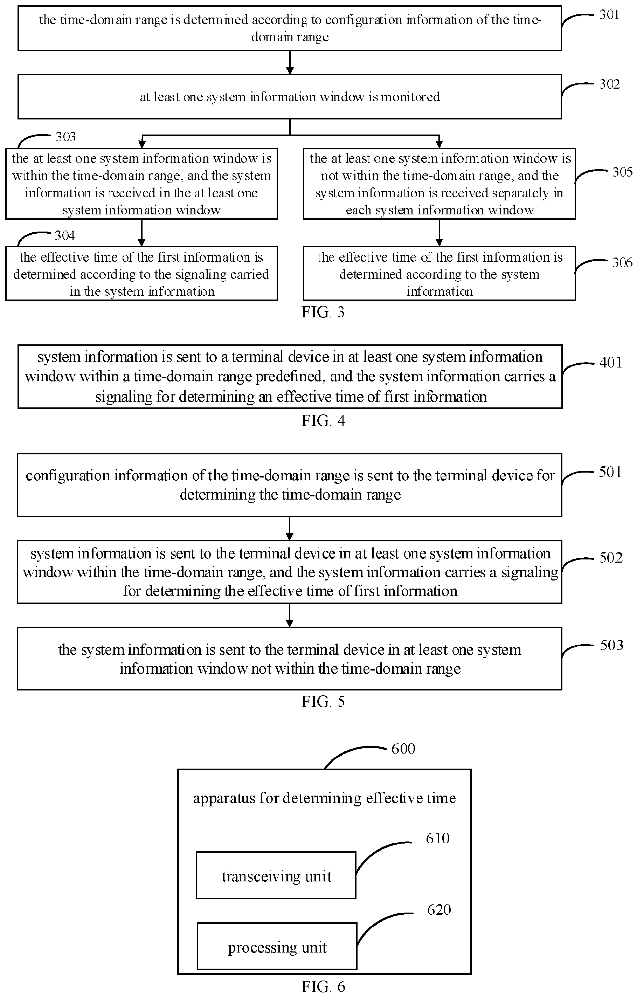

Referring to FIG. 3, FIG. 3 is a schematic flowchart of a method for determining an effective time according to embodiments of the present invention. It should be noted that the method for determining an effective time as described in embodiments of the present invention is performed by a terminal device. As shown in FIG. 3, the method may include the following steps.

In step 301, the time-domain range is determined according to configuration information of the time-domain range.

In embodiments of the present invention, the terminal device is able to: determine the configuration information of the time-domain range according to an indication from the network device or a provision stipulated in a protocol in advance, and determine the time-domain range according to the configuration information.

The configuration information of the time-domain range may include at least one of: a starting position of the time-domain range; a length of the time-domain range; or an ending position of the time-domain range.

In some embodiments, the terminal device receives a primary synchronization signal (PSS) and/or a secondary synchronization signal (SSS) sent by the network device, and the terminal device is able to determine the configuration information of the time-domain range according to the PSS and/or the SSS.

Optionally, as a first possible example, the terminal device determines the configuration information of the time-domain range based on sequence information of the PSS according to a preset rule.

As a second possible example, the terminal device determines the configuration information of the time-domain range based on sequence information of the SSS according to a preset rule.

As a third possible example, the terminal device determines the configuration information of the time-domain range based on sequence information of the PSS and sequence information of the SSS according to a preset rule.

Optionally, as a first possible example, the terminal device may determine the configuration information of the time-domain range based on transmission position information of the PSS.

As a second possible example, the terminal device may determine the configuration information of the time-domain range based on transmission position information of the SSS.

As a third possible example, the terminal device may determine the configuration information of the time-domain range based on transmission position information of the PSS and transmission position information of the SSS.

In some examples, the terminal device may also receive second signaling sent by the network device to determine the configuration information of the time-domain range. The second signaling sent by the network device may be carried in the system information, such as a master information block (MIB), or other system information block SIBx, or may also be carried in other high-level signaling, such as a radio resource control (RRC) signaling, a media access control layer (MAC) control element (CE), MAC CE, or a physical layer signaling, etc.

In some examples, the terminal device may also determine the configuration information of the time-domain range in a manner predefined in a protocol. For example, the configuration information of the time-domain range is specified in the protocol, and the terminal device directly determines the configuration information of the time-domain range in accordance with the protocol.

In embodiments of the present invention, the terminal device is able to determine the time-domain range according to the configuration information of the time-domain range. The terminal device is able to determine a position of the time-domain range, and collectively receive the system information in the time-domain range. That is, further, the terminal device is able to collectively receive the system information transmitted in at least one system information window within the time-domain range.

In step 302, at least one system information window is monitored.

In embodiments of the present invention, the terminal device is able to monitor the at least one SI window to receive the system information in the at least one SI window.

After the at least one SI window is monitored, the terminal device is able to determine whether the at least one SI window is within the time-domain range.

In step 303, the at least one system information window is within the time-domain range, and the system information is received in the at least one system information window.

In embodiments of the present invention, after determining the time-domain range, the terminal device is able to collectively receive the system information transmitted in at least one system information window within the time-domain range. The system information carries a signaling for determining an effective time of first information.

It can be understood that the system information transmitted in at least one system information (SI) window within the time-domain range is the same, so the terminal device is able to collectively receive the system information transmitted in the at least one system information window.

It should be noted that "collectively receive" means that if the terminal device does not complete the detection of the system information in a first SI window within the time-domain range and does not obtain first system information, the terminal device can continue the detection in at least one subsequent second SI window within the time-domain range, and collectively decode information received in the first SI window and information received in the at least one second SI window to obtain the system information.

In some examples, the first information may include ephemeris information and common timing advance (common TA) information.

In step 304, the effective time of the first information is determined according to the signaling carried in the system information.

In embodiments of the present invention, the terminal device is able to collectively receive the system information in at least one system information window within the time-domain range, and determine the effective time of the first information according to the signaling carried in the system information. The signaling carried in the system information is used to determine the effective time of the first information. The network device explicitly notifies the terminal device of the effective time of the first information via the signaling.

In step 305, the at least one system information window is not within the time-domain range, and the system information is received separately in each system information window.

In embodiments of the present invention, for the system information transmitted in at least one SI window not within the time-domain range, the terminal device receives the system information separately in individual SI windows not within the time-domain range, and then determine the effective time of the first information according to the system information.

It should be noted that in embodiments of the present invention, for the system information transmitted in at least one SI window not within the time-domain range, the terminal device does not collectively receive the system information, but receives the system information in individual SI windows. If the terminal device does not complete the detection of the system information in a third SI window not within the time-domain range, and does not obtain the system information transmitted in the third SI window, the terminal device restarts the detection and reception of the system information in a subsequent fourth SI window not within the time-domain range. If the detection is completed, the system information transmitted in the fourth SI window is obtained; if the terminal device does not complete the detection in the fourth SI window, the terminal device restarts the detection and reception of the system information in a subsequent fifth SI window not within the time-domain range.

In addition, it should be noted that multiple system information transmitted in at least one SI window not within the time-domain range does not explicitly carry the signaling for determining the effective time of the first information, but indicates the effective time of the first information in an implicit manner. For example, the effective time is associated with the SI window, so there are differences in the multiple system information transmitted in at least one SI window not within the time-domain range.

In step 306, the effective time of the first information is determined according to the system information.

In embodiments of the present invention, the multiple system information transmitted in at least one SI window not within the time-domain range does not explicitly carry the signaling for determining the effective time of the first information, but indicates the effective time of the first information in an implicit manner.

As an example, the effective time of the first information is associated with the SI window transmitting the system information, and the terminal device is able to determine the effective time of the first information according to a time-domain position of the SI window. Alternatively, some information fields in the system information may be reused, and the effective time of the first information may be determined through the reused information fields, and so on. It can be understood that the system information may implicitly indicate the effective time of the first information in other manners, which are not limited here.

In summary, the time-domain range is determined according to the configuration information of the time-domain range, at least one system information window is monitored, if the at least one system information window is within the time-domain range, the system information is received in the at least one system information window, and the effective time of the first information is determined according to the signaling carried in the system information; if the at least one system information window is not within the time-domain range, the system information is received separately in each system information window, and the effective time of the first information is determined according to the system information, so that the terminal device can determine the effective time of the first information, and at the same time can collectively receive the system information in different system information windows, which effectively improves the information transmission efficiency and the information reception accuracy, and improves the transmission robustness of communication system. Moreover, when the system information is updated, the network device and the terminal device can be ensured to have a consistent understanding on the effective time of the updated system information.

Referring to FIG. 4, FIG. 4 is a schematic flowchart of a method for determining an effective time according to embodiments of the present invention. It should be noted that the method for determining an effective time as described in embodiments of the present invention is performed by a network device. As shown in FIG. 4, the method may include the following steps.

In step 401, system information is sent to a terminal device in at least one system information window within a time-domain range predefined, and the system information carries a signaling for determining an effective time of first information.

In embodiments of the present invention, the network device sends the system information to the terminal device in at least one system information window within the time-domain range predefined, and the system information carries the signaling for determining the effective time of the first information, so that the terminal device is able to collectively receive the system information transmitted in the at least one system information window within the time-domain range to obtain the system information.

It can be understood that the system information transmitted in at least one system information (SI) window within the time-domain range is the same, so the terminal device can collectively receive the system information transmitted in the at least one system information window.

It should be noted that "collectively receive" means that if the terminal device does not complete the detection of the system information in a first SI window within the time-domain range and does not obtain the system information, the terminal device can continue the detection in at least one subsequent second SI window within the time-domain range, and collectively decode information received in the first SI window and information received in the at least one second SI window to obtain the system information.

In some examples, the network device also sends configuration information of the time-domain range to the terminal device, and the configuration information of the time-domain range is used to determine the time-domain range. The configuration information of the time-domain range includes at least one of: a starting position of the time-domain range, a length of the time-domain range, or an ending position of the time-domain range. The terminal device is able to determine the time-domain range according to the configuration information of the time-domain range.

Optionally, the configuration information of the time-domain range may be defined by a protocol.

In some examples, the first information may include ephemeris information and common timing advance (common TA) information.

In embodiments of the present invention, in some examples, the network device sends the system information to the terminal device in at least one system information window not within the time-domain range, and the at least one system information window not within the time-domain range is used to receive the system information separately.

In embodiments of the present invention, the system information transmitted in the SI window not within the time-domain range does not explicitly carry the signaling indicating the effective time of the first information, but implicitly indicates the effective time of the first information. Therefore, there are differences in the system information transmitted in multiple system information windows not within the time-domain range. The terminal device can receive the system information separately in individual SI window not within the time-domain range, and can determine the effective time of the first information according to the system information.

It should be noted that in embodiments of the present invention, the system information transmitted in the SI window may be a system information block (SIB) or the like.

In summary, the system information is sent to the terminal device in at least one system information window within the time-domain range predefined, and the signaling carried in the system information is used to determine the effective time of the first information, so that the terminal device can determine the effective time of the first information, and at the same time can collectively receive the system information in different system information windows, which effectively improves the information transmission efficiency and the information reception accuracy, and improves the transmission robustness of communication system. Moreover, when the system information is updated, the network device and the terminal device can be ensured to have a consistent understanding on the effective time of the updated system information.

Referring to FIG. 5, FIG. 5 is a schematic flowchart of a method for determining an effective time according to embodiments of the present invention. It should be noted that the method for determining an effective time as described in embodiments of the present invention is performed by a network device. As shown in FIG. 5, the method may include the following steps.

In step 501, configuration information of the time-domain range is sent to the terminal device. The configuration information of the time-domain range is used to determine the time-domain range.

In embodiments of the present invention, the network device sends the configuration information of the time-domain range to the terminal device, and the configuration information is used to determine the time-domain range.

The configuration information of the time-domain range includes at least one of: a starting position of the time-domain range; a length of the time-domain range; or an ending position of the time-domain range.

In some examples, the network device sends a primary synchronization signal (PSS) and/or a secondary synchronization signal (SSS) to the terminal device, and the PSS and/or the SSS is used to determine the configuration information of the time-domain range.

Optionally, as a first possible example, sequence information of the PSS is used to determine the configuration information of the time-domain range. The terminal device is able to determine the configuration information of the time-domain range based on the sequence information of the PSS according to a preset rule.

As a second possible example, sequence information of the SSS is used to determine the configuration information of the time-domain range. The terminal device is able to determine the configuration information of the time-domain range based on the sequence information of the SSS according to a preset rule.

As a third possible example, sequence information of the PSS and sequence information of the SSS are used to determine the configuration information of the time-domain range. The terminal device is able to determine the configuration information of the time-domain range based on the sequence information of the PSS and the sequence information of the SSS according to a preset rule.

Optionally, as a first possible example, transmission position information of the PSS is used to determine the configuration information of the time-domain range. The terminal device is able to determine the configuration information of the time-domain range based on the transmission position information of the PSS.

As a second possible example, transmission position information of the SSS is used to determine the configuration information of the time-domain range. The terminal device is able to determine the configuration information of the time-domain range based on the transmission position information of the SSS.

As a third possible example, transmission position information of the PSS and transmission position information of the SSS are used to determine the configuration information of the time-domain range. The terminal device is able to determine the configuration information of the time-domain range based on the transmission position information of the PSS and the transmission position information of the SSS.

In some examples, the terminal device may also receive second signaling sent by the network device to determine the configuration information of the time-domain range. The second signaling sent by the network device may be carried in the system information, such as a master information block (MIB), or other system information block SIBx, or may also be carried in other high-level signaling, such as a radio resource control (RRC) signaling, a media access control layer (MAC) control element (CE), MAC CE, or a physical layer signaling, etc.

In some examples, the network device and the terminal device may also determine the configuration information of the time-domain range according to a manner predefined in a protocol. For example, the configuration information of the time-domain range is specified in the protocol, and the network device and the terminal device directly determines the configuration information of the time-domain range in accordance with the protocol.

In step 502, the system information is sent to the terminal device in at least one system information window within the time-domain range. The system information carries a signaling for determining the effective time of first information.

In embodiments of the present invention, the network device sends the system information to the terminal device in at least one system information window within the time-domain range predefined, the system information carries the signaling, and the signaling is used to determine the effective time of the first information, so that the terminal device is able to collectively receive the system information transmitted in the at least one system information window within the time-domain range.

It can be understood that the system information transmitted in at least one system information (SI) window within the time-domain range is the same, so the terminal device is able to collectively receive the system information transmitted in the at least one system information window.

It should be noted that "collectively receive" means that if the terminal device does not complete the detection of the system information in a first SI window within the time-domain range and does not obtain first system information, the terminal device can continue the detection in at least one subsequent second SI window within the time-domain range, and collectively decode information received in the first SI window and information received in the at least one second SI window to obtain the system information.

In step 503, the system information is sent to the terminal device in at least one system information window not within the time-domain range.

In the at least one system information window not within the time-domain range, the system information is received separately.

In embodiments of the present invention, the system information transmitted in the SI window not within the time-domain range does not explicitly carry the signaling indicating the effective time of the first information, but implicitly indicates the effective time of the first information. Therefore, there are differences in the system information transmitted in multiple system information windows not within the time-domain range. The terminal device is able to receive the system information in individual SI window not within the time-domain range, and determine the effective time of the first information according to the system information.

It should be noted that in embodiments of the present invention, the system information transmitted in the SI window may be a system information block (SIB) or the like. The system information transmitted in the SI window within the time-domain range explicitly carries the signaling for determining the effective time of the first information, while the system information transmitted in the SI window not within the time-domain range does not explicitly carry the signaling.

In summary, the configuration information of the time-domain range is sent to the terminal device, the configuration information of the time-domain range is used to determine the time-domain range, the system information is sent to the terminal device in at least one system information window within the time-domain range, and the signaling carried in the system information is used to determine the effective time of the first information, and the system information is sent to the terminal device in at least one system information window not within the time-domain range, so that the terminal device can determine the effective time of the first information, and at the same time can collectively receive the system information in different system information windows, which effectively improves the information transmission efficiency and the information reception accuracy, and improves the transmission robustness of communication system. Moreover, when the system information is updated, the network device and the terminal device can be ensured to have a consistent understanding on the effective time of the updated system information.

Corresponding to the method for determining an effective time according to the above-mentioned embodiments, the present invention also provides an apparatus for determining an effective time. Since the apparatus for determining an effective time according to embodiments of the present invention corresponds to the method for determining an effective time according to the above-mentioned embodiments, the implementations of the method for determining an effective time are also applicable to the apparatus for determining an effective time as set forth in the following embodiments of the present invention, which will not be elaborated again in the following embodiments.

Referring to FIG. 6, FIG. 6 is a schematic block diagram of an apparatus for determining an effective time according to embodiments of the present invention.

As shown in FIG. 6, the apparatus 600 for determining an effective time includes a transceiving unit 610 and a processing unit 620.

The transceiving unit 610 is configured to receive system information in at least one system information window within a time-domain range predefined; and the processing unit 620 is configured to determine the effective time of first information according to a signaling carried in the system information.

Optionally, the at least one system information window within the time-domain range is used to collectively receive the system information; at least one system information window not within the time-domain range is used to receive the system information separately.

Optionally, the processing unit 620 is further configured to: determine the time-domain range according to configuration information of the time-domain range.

Optionally, the configuration information of the time-domain range includes at least one of: a starting position of the time-domain range; a length of the time-domain range; or an ending position of the time-domain range.

Optionally, the processing unit 620 is specifically configured to: determine the configuration information of the time-domain range defined by a protocol; or determine the configuration information of the time-domain range according to a second signaling sent by a network device.

Optionally, the processing unit 620 is specifically configured to: receive a primary synchronization signal (PSS) and/or a secondary synchronization signal (SSS) sent by a network device; and determine the configuration information of the time-domain range according to the PSS and/or the SSS.

Optionally, the processing unit 620 is specifically configured to: determine the configuration information of the time-domain range according to sequence information of the PSS and/or the SSS; or determine the configuration information of the time-domain range according to transmission position information of the PSS and/or the SSS.

With the apparatus for determining an effective time as described in embodiments of the present invention, the system information may be received in at least one system information window within the time-domain range predefined, and the effective time of the first information is determined according to the signaling carried in the system information, so that the terminal device can determine the effective time of the first information, and at the same time can collectively receive the system information in different system information windows, which effectively improves the information transmission efficiency and the information reception accuracy, and improves the transmission robustness of communication system. Moreover, when the system information is updated, the network device and the terminal device can be ensured to have a consistent understanding on the effective time of the updated system information.

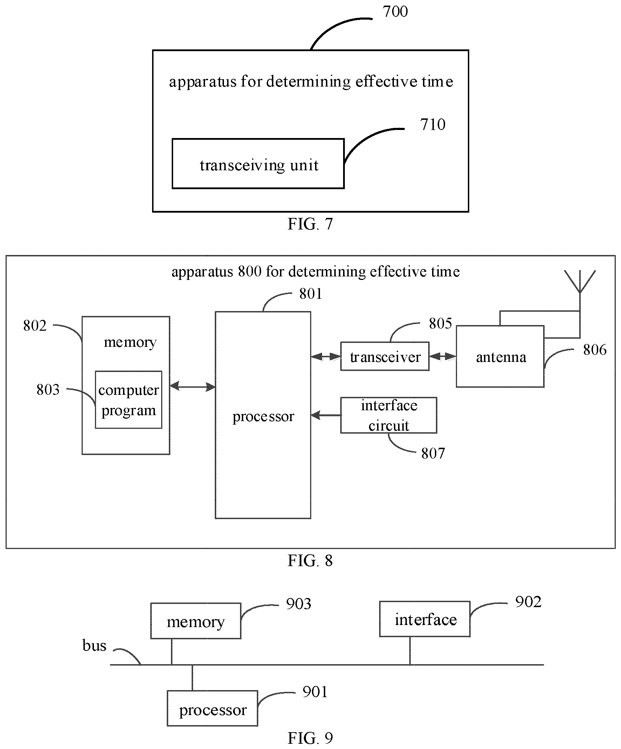

Referring to FIG. 7, FIG. 7 is a schematic block diagram of an apparatus for determining an effective time according to embodiments of the present invention.

As shown in FIG. 7, the apparatus 700 for determining an effective time includes a transceiving unit 710.

The transceiving unit 710 is configured to send system information to a terminal device in at least one system information window within a time-domain range predefined. The system information carries a signaling for determining the effective time of first information.

Optionally, the transceiving unit 710 is further configured to send the system information to the terminal device in at least one system information window not within the time-domain range. The at least one system information window within the time-domain range is used to collectively receive the system information. The at least one system information window not within the time-domain range is used to receive the system information separately.

Optionally, the transceiving unit 710 is further configured to send configuration information of the time-domain range to the terminal device. The configuration information of the time-domain range is used to determine the time-domain range.

Optionally, the configuration information of the time-domain range includes at least one of: a starting position of the time-domain range; a length of the time-domain range; or an ending position of the time-domain range.

Optionally, the transceiving unit 710 is specifically configured to: send a second signaling to the terminal device. The second signaling is used to determine the configuration information of the time-domain range.

Optionally, the transceiving unit 710 is specifically configured to: send a primary synchronization signal (PSS) and/or a secondary synchronization signal (SSS) to the terminal device. Sequence information of the PSS and/or the SSS is used to determine the configuration information of the time-domain range; or transmission position information of the PSS and/or the SSS is used to determine the configuration information of the time-domain range.

With the apparatus for determining an effective time as described in embodiments of the present invention, the system information may be sent to the terminal device in at least one system information window within the time-domain range predefined, and the signaling carried in the system information is used to determine the effective time of the first information, so that the terminal device can determine the effective time of the first information, and at the same time can collectively receive the system information in different system information windows, which effectively improves the information transmission efficiency and the information reception accuracy, and improves the transmission robustness of communication system. Moreover, when the system information is updated, the network device and the terminal device can be ensured to have a consistent understanding on the effective time of the updated system information.

In order to implement the above embodiments, embodiments of the present invention also provide a communication apparatus. The communication apparatus includes: a processor; and a memory, having stored therein computer programs. The processor is configured to execute the computer programs stored in the memory to cause the apparatus to perform the method according to embodiments as described with reference to FIG. 2 to FIG. 3.

In order to implement the above embodiments, embodiments of the present invention also provide a communication apparatus. The communication apparatus includes: a processor; and a memory, having stored therein computer programs. The processor is configured to execute the computer programs stored in the memory to cause the apparatus to perform the method according to embodiments as described with reference to FIG. 4 to FIG. 5.

In order to implement the above embodiments, embodiments of the present invention also provide a communication apparatus. The communication apparatus includes: a processor and an interface circuit. The interface circuit is configured to receive code instructions and transmit the code instructions to the processor. The processor is configured to run the code instructions to perform the method according to embodiments as described with reference to FIG. 2 to FIG. 3.

In order to implement the above embodiments, embodiments of the present invention also provide a communication apparatus. The communication apparatus includes: a processor and an interface circuit. The interface circuit is configured to receive code instructions and transmit the code instructions to the processor. The processor is configured to run the code instructions to perform the method according to embodiments as described with reference to FIG. 4 to FIG. 5.

Referring to FIG. 8, FIG. 8 is a schematic block diagram of another apparatus 800 for determining an effective time according to embodiments of the present invention. The apparatus 800 for determining an effective time may be a network device, may also be a terminal device, may also be a chip, a chip system, or a processor that supports the network device to implement the above method, or may also be a chip, a chip system, or a processor that supports the terminal device to implement the above method. The apparatus may be used to implement the methods as described in the above method embodiments, and for details, reference may be made to the descriptions on the above method embodiments.

The apparatus 800 for determining an effective time may include one or more processors 801. The processor 801 may be a general-purpose processor or a special-purpose processor. For example, it may be a baseband processor or a central processing unit. The baseband processor may be configured to process a communication protocol and communication data, and the central processing unit may be configured to control an apparatus for determining an effective time (such as a base station, a baseband chip, a terminal, a terminal chip, a DU or a CU, etc.), execute computer programs, and process data of computer programs.

Optionally, the apparatus 800 for determining an effective time may further include one or more memories 802 that may have stored therein computer programs 803. The processor 801 executes the computer programs 803 to cause the apparatus 800 for determining an effective time to implement the methods as described in the above method embodiments. The computer programs 803 may be solidified in the processor 801, and in this case, the processor 801 may be implemented by hardware.

Optionally, the memory 802 may have stored therein data. The apparatus 800 for determining an effective time and the memory 802 may be set separately or integrated together.

Optionally, the apparatus 800 for determining an effective time may further include a transceiver 805 and an antenna 806. The transceiver 805 may be called a transceiving unit, a transceiving machine, a transceiving circuit or the like, for implementing a transceiving function. The transceiver 805 may include a receiver and a transmitter. The receiver may be called a receiving machine, a receiving circuit or the like, for implementing a receiving function. The transmitter may be called a sending machine, a sending circuit or the like for implementing a sending function.

Optionally, the apparatus 800 for determining an effective time may further include one or more interface circuits 807. The interface circuit 807 is configured to receive code instructions and transmit the code instructions to the processor 801. The processor 801 runs the code instructions to enable the apparatus 800 for determining an effective time to execute the methods as described in the foregoing method embodiments.

In an example, the processor 801 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an example, the apparatus 800 for determining an effective time may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (also called positive channel metal oxide semiconductor, PMOS), a bipolar junction transistor (BJT), a bipolar CMOS (BiCMOS), silicon germanium (SiGe), gallium arsenide (GaAs), etc.

The apparatus for determining an effective time described in the above embodiments may be the network device or the terminal device, but the scope of the apparatus for determining an effective time described in the present invention is not limited thereto, and a structure of the apparatus for determining an effective time is not limited by FIG. 6 to FIG. 7. The apparatus for determining an effective time may be a stand-alone device or may be a part of a larger device. For example, the apparatus for determining an effective time may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal, a cellular phone, a wireless device, a handheld machine, a mobile unit, a vehicle device, a network device, a cloud device, an artificial intelligence device, etc.;
(6) others.

For the case where the apparatus for determining an effective time may be a chip or a chip system, reference may be made to a schematic structural diagram of the chip shown in FIG. 9. The chip shown in FIG. 9 includes a processor 901 and an interface 902. In the chip, one or more processors 901 may be provided, and a plurality of interfaces 902 may be provided.

For the case where the chip is used to implement functions of the network device in embodiments of the present invention, the interface 902 is configured to receive code instructions and transmit the code instructions to the processor; and the processor 901 is configured to run the code instructions to perform the method as described with reference to FIG. 2 to FIG. 3.

For the case where the chip is used to implement functions of the terminal device in embodiments of the present invention, the interface 902 is configured to receive code instructions and transmit the code instructions to the processor; and the processor 901 is configured to run the code instructions to perform the method as described with reference to FIG. 4 to FIG. 5.

Optionally, the chip further includes a memory 903 for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

Embodiments of the present invention also provide a communication system. The system includes the apparatus for determining an effective time as the terminal device and the apparatus for determining an effective time as the network device as described in the aforementioned embodiments with reference to FIG. 6 to FIG. 7, or the system includes the apparatus for determining an effective time as the terminal device and the apparatus for determining an effective time as the network device as described in the aforementioned embodiments with reference to FIG. 8.

The present invention also provides a readable storage medium having stored therein instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the apparatus for determining an effective time, and the values or representations of the parameters may also be other values or representations understandable by the apparatus for determining an effective time. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

It can be understood that various forms of flowcharts shown above may be used to reorder, add, or remove steps. For example, the steps described in the present invention may be performed in parallel, sequentially, or in a different order. There is no limitation herein as long as the desired results of the technical solutions disclosed herein can be realized.

The above-mentioned specific embodiments do not constitute a limitation on the protection scope of the present invention. It can be understood by those skilled in the art that various modifications, combinations, sub-combinations and substitutions may be made depending on design requirements and other factors. Any modifications, equivalent replacements, and improvements made within the spirit and principle of the present invention shall be included within the protection scope of the present invention.

## Claims

1. A method for determining an effective time, performed by a terminal device, comprising:
receiving system information in at least one system information window within a time-domain range predefined; and
determining the effective time of first information according to a signaling carried in the system information.

2. The method according to claim 1, wherein the at least one system information window within the time-domain range is used to collectively receive the system information;
at least one system information window not within the time-domain range is used to receive the system information separately.

3. The method according to claim 1, further comprising:
determining the time-domain range according to configuration information of the time-domain range.

4. The method according to claim 3, wherein the configuration information of the time-domain range comprises at least one of:
a starting position of the time-domain range;
a length of the time-domain range; or
an ending position of the time-domain range.

5. The method according to claim 3, further comprising:
determining the configuration information of the time-domain range defined by a protocol; or
determining the configuration information of the time-domain range according to a second signaling sent by a network device.

6. The method according to claim 3, further comprising:
receiving a primary synchronization signal (PSS) and/or a secondary synchronization signal (SSS) sent by a network device; and
determining the configuration information of the time-domain range according to the PSS and/or the SSS.

7. The method according to claim 6, wherein determining the configuration information of the time-domain range according to the PSS and/or the SSS comprises:
determining the configuration information of the time-domain range according to sequence information of the PSS and/or the SSS; or
determining the configuration information of the time-domain range according to transmission position information of the PSS and/or the SSS.

8. A method for determining an effective time, performed by a network device, comprising:
sending system information to a terminal device in at least one system information window within a time-domain range predefined;
wherein the system information carries a signaling for determining the effective time of first information.

9. The method according to claim 8, further comprising:
sending the system information to the terminal device in at least one system information window not within the time-domain range;
wherein the at least one system information window within the time-domain range is used to collectively receive the system information;
the at least one system information window not within the time-domain range is used to receive the system information separately.

10. The method according to claim 9, further comprising:
sending configuration information of the time-domain range to the terminal device;
wherein the configuration information of the time-domain range is used to determine the time-domain range.

11. The method according to claim 10, wherein the configuration information of the time-domain range comprises at least one of:
a starting position of the time-domain range;
a length of the time-domain range; or
an ending position of the time-domain range.

12. The method according to claim 10, wherein sending the configuration information of the time-domain range to the terminal device comprises:
sending a second signaling to the terminal device, wherein the second signaling is used to determine the configuration information of the time-domain range.

13. The method according to claim 10, wherein sending the configuration information of the time-domain range to the terminal device comprises:
sending a primary synchronization signal (PSS) and/or a secondary synchronization signal (SSS) to the terminal device;
wherein sequence information of the PSS and/or the SSS is used to determine the configuration information of the time-domain range; or
transmission position information of the PSS and/or the SSS is used to determine the configuration information of the time-domain range.

14. An apparatus for determining an effective time, applicable to a terminal device, comprising:
a transceiving unit, configured to receive system information in at least one system information window within a time-domain range predefined; and
a processing unit, configured to determine the effective time of first information according to a signaling carried in the system information.

15. A sending apparatus for an uplink channel, applicable to a network device, comprising:
a transceiving unit, configured to send system information to a terminal device in at least one system information window within a time-domain range predefined;
wherein the system information carries a signaling for determining the effective time of first information.

16. A communication apparatus, comprising:
a processor; and
a memory, having stored therein computer programs,
wherein the processor is configured to execute the computer programs stored in the memory to cause the apparatus to perform the method according to any one of claims 1 to 7.

17. A communication apparatus, comprising:
a processor; and
a memory, having stored therein computer programs,
wherein the processor is configured to execute the computer programs stored in the memory to cause the apparatus to perform the method according to any one of claims 8 to 13.

18. A communication apparatus, comprising:
a processor; and
an interface circuit, configured to receive code instructions and transmit the code instructions to the processor;
wherein the processor is configured to run the code instructions to perform the method according to any one of claims 1 to 7.

19. A communication apparatus, comprising:
a processor; and
an interface circuit, configured to receive code instructions and transmit the code instructions to the processor;
wherein the processor is configured to run the code instructions to perform the method according to any one of claims 8 to 13.

20. A computer-readable storage medium, having stored therein instructions that, when executed, cause the method according to any one of claims 1 to 7 to be performed.

21. A computer-readable storage medium, having stored therein instructions that, when executed, cause the method according to any one of claims 8 to 13 to be performed.
